Europäisches Patentamt

European Patent Office

Office européen des brevets

(11) Publication number: **0 505 581 A1**

## EUROPEAN PATENT APPLICATION
### published in accordance with Art. 158(3) EPC

(21) Application number: 91919284.9

(22) Date of filing: **09.10.91**

(86) International application number: **PCT/JP91/01383**

(87) International publication number: **WO 92/06932 (30.04.92 92/10)**

(51) Int. Cl.5: **C03C 25/02**, C08F 20/00, C08F 299/00, C09D 4/00, C09D 183/00, G02B 6/44

(30) Priority: **11.10.90 JP 270595/90**

(43) Date of publication of application:
**30.09.92 Bulletin 92/40**

(84) Designated Contracting States:
**DE FR GB NL**

(71) Applicant: **Ishikawajima-Harima Heavy Industries Co., Ltd.**
**2-1, Ohtemachi 2-chome**
**Chiyoda-ku, Tokyo 100(JP)**
Applicant: **NIPPON SHOKUBAI CO., LTD.**
**1-1, Koraibashi, 4-chome**
**Chuo-ku, Osaka-shi, Osaka-fu 541(JP)**

(72) Inventor: **MURAMATSU, Takehiko**

**3-23, Toyosu 3-chome, Koto-ku**
**Tokyo 135(JP)**
Inventor: **SHIOZAKI, Hiroyuki**
**2-18, Maborikaigan**
**Yokosuka-shi, Kanagawa 239(JP)**
Inventor: **GOTO, Takakiyo**
**985-6, Kamiiidacho, Izumi-ku**
**Yokohama-shi, Kanagawa 245(JP)**
Inventor: **HOZUMI, Yoshiyuki**
**61-11, Ikebukuro 2-chome**
**Toshima-ku, Tokyo 171(JP)**

(74) Representative: **Schaumburg, Thoenes & Englaender**
**Mauerkircherstrasse 31**
**W-8000 München 80(DE)**

(54) COVERING MATERIAL FOR OPTICAL-FIBER SENSOR FOR DETECTING LEAKAGE OIL.

(57) A covering material for an optical-fiber sensor used for an apparatus for detecting leakage oil by using the change in light propagation loss or in intensity of backscattering light produced in an optical fiber. The covering material has a refractive index smaller than that of a core or clad material of the optical fiber and consists of the polymer (I) obtained by polymerizing a monomer (A) mainly composed of the monomer having polymerizable unsaturated groups in the molecule made of the monomer with the solubility parameter (SP value) of 9 or less and/or the monomer having polyalkylsiloxane groups or fluorohydrocarbon groups.

EP 0 505 581 A1

1: Optical pulse source
3: Selector
9: Selector
11: Optical power meter

# FIG. 1

## Technical field

The present invention relates to a covering material for optical-fiber sensors used with devices for detecting leakage oil appearing along optical fibers of the sensors by sensing changes in the propagation loss of light or changes in the intensity of backscattering light occurring in the optical fibers.

## Background Art

Leakage-oil-detecting devices measuring changes in the propagation loss of light or changes in the intensity of back-scattering light occurring in optical fibers with an optical-power meter or an OTDR (Optical-Time-Domain Reflectometer) have an intrinsic property of being perfectly explosion-proof. Because of this property, such leakage-oil-detecting devices are useful for leakage monitoring on oil tanks or pipelines and for pollution monitoring under or on the sea (water) and have an advantage that the leakage monitoring and the pollution monitoring can be carried out safely and reliably.

As conventional leakage-oil-detecting optical-fibers, there are bundled-type optical-fibers and cladding-separated-type multiple-mode optical-fibers utilizing the phenomena that the critical angle of rays of light changes due to the refractive index of the leakage oil contacting the optical fibers and that the propagation loss of light in the optical fibers increases because the sticking of the oil. Those leakage-oil-detecting optical-fibers have been utilized for the purpose of remotely detecting oil leakage.

However, such conventional leakage-oil-detecting optical-fibers have such problems as being difficult to be applied to leakage-oil-detecting devices which are to be installed possibly at places of bad environmental conditions, and in the case that those optical fibers are covered with covering materials, because covering materials lack an affinity for leakage oil, the optical fibers show a low sensitivity in detecting leakage oil or require a long period of detection time.

It is accordingly an object of the present invention to provide a covering material for leakage-oil-detecting optical-fiber sensors which can respond quickly upon contacting leakage oil so as to achieve a highly sensitive and stable measurement of oil leaks and leak positions over a long distance with devices for detecting leakage oil along optical fibers by sensing changes in the propagation loss or changes in the intensity of backscattering light occurring in the optical fibers.

## Disclosure of the Invention

The inventors of the present invention have found that a polymer obtained by polymerizing a specific monomer has a good solubility or a swelling property in various oils and that the polymer is greatly effective as an aforementioned covering material for the leakage-oil-detecting optical-fiber sensors, thus accomplishing the present invention.

According to the present invention, a covering material is provided for the leakage-oil-detecting optical-fiber sensors used with devices for detecting leakage oil along optical fibers by sensing changes in the propagation loss or changes in the intensity of backscattering light occurring in the optical fibers, and the covering material is characterized in that it has a refractive index less than or equal to that of core materials or cladding materials constituting the optical fibers to be covered with the covering material and that it includes a polymer (I) capable of dissolving in leakage oil or of absorbing it, the polymer (I) being obtained by polymerizing a monomer (A) having, as the principal component, a monomer having a solubility parameter value (SP value) of 9 or less and/or a monomer having a polyalkyl-siloxane group or a fluorohydrocarbon group, each of the monomers having one polymerizing unsaturated-group in a molecule.

In general, the solubility parameter value (SP value) is used as a measure to indicate the polarity of chemical compounds. In the present invention, the value derived by substituting the Hoy's cohesive-energy constant in the Smallian formula is adopted as the solubility parameter (SP value). The unit of the parameter is expressed in $(cal/cm^3)^{1/2}$. The monomer constituting the principal component of the monomer (A) to be used in the present invention is a monomer having a solubility parameter value (SP value) of 9 or less and/or a monomer having a polyalkyl-slloxane group or a fluorohydrocarbon group (substantially having a solubility parameter value of 9 or less though a Hoy's cohesive-energy constant is not given to it), each of the monomers having one polymerizing unsaturated-group in a molecule. From the polymers to be obtained by polymerizing the monomer (A), which are capable of dissolving in leakage oil or of absorbing it, a suitable polymer can be selected in accordance with the reflective index of a core material or a cladding material constituting the optical fiber to be covered with the covering material of the present invention. It is undesirable that any monomer having a solubility parameter value of more than 9 is used as the principal component of the monomer (A) because polymers so obtained are remarkably inferior in solubility or have an inferior swelling property in leakage oil.

Examples of monomers having a solubility parameter value of 9 or less and having one polymerizing unsaturated group in a molecule and/or monomers having a polyalkyl-siloxane group or a fluorohydrocarbon group in a molecule are unsaturated carboxylic-acid esters such as methyl (meth)acrylate, ethyl (meth)-acrylate, butyl (meth)acrylate, t-butyl (meth)acrylate, 2-ethylhexyl (meth)acrylate, n-octyl (meth)acrylate, dodecyl (meth)acrylate, stearyl (meth)acrylate, phenyl (meth)acrylate, octylphenyl (meth)acrylate, nonyl phenyl (meth)acrylate, dinonylphenyl (meth)acrylate, cyclohexyl (meth)acrylate, methyl (meth)acrylate, isobornyl (meth)acrylate, dibutyl maleate, didodecyl maleate, dodecyl crotonate, didodecyl itaconate, etc.; (meth)acrylamides having a hydrocarbon group such as (di)butyl (meth)acrylamide, (di)dodecyl (meth)-acrylamide, (di)stearyl (meth)acrylamide, (di)butylphenyl (meth)acrylamide, (di)octylphenyl (meth)-acrylamide, etc.; alpha-olefins such as 1-hexene, 1-octene, isooctene, 1-nonene, 1-decene, 1-dodecene, etc.; allcyclic-vinyl compounds such as vinyl cyclohexane, etc.; allyl ethers having an aliphatic-hydrocarbon group such as dodecyl allyl ether, etc.; vinyl esters having an aliphatic hydrocarbon group such as vinyl caproate, vinyl laurate, vinyl palmitate, vinyl stearate, etc,; vinyl ethers having an aliphatic-hydrocarbon group such as butyl-vinyl ether, dodecyl-vinyl ether, etc.; aromatic-vinyl compounds such as styrene, t-butylstyrene, octylstyrene, etc.; silicone compounds such as polydimethyl ((meth)acryloxypropyl)siloxane, etc.; and fluorine compounds such as tetrafluoroethyl (meth)acrylate, octafluoropentyl (meth)acrylate, heptadecafluorodecyl (meth)acrylate. One or two or more of those monomers can be used.

Among those, particularly preferable is a monomer (a) of mono(meth)acrylic acid ester of alcohol having at least one group selected from the groups of aliphatic-hydrocarbon groups with 3 - 30 carbon atoms, alicyclic-hydrocarbon groups with 6 - 30 carbon atoms, polyalkyl-siloxane groups with a degree of condensation of 3 - 100, and fluorohydrocarbon groups with 3 - 30 carbon atoms.

The proportion of such a monomer having a solubility parameter value (SP value) of 9 or less and/or a monomer having a polyalkyl-siloxane group or a fluorohydrocarbon group used in the monomer (A) is preferably 50 % or more by weight or more preferably 70 % or more by weight with respect to the total amount of the monomer (A). It is undesirable that the proportion of a monomer having a solubility parameter value of 9 or less and/or the monomer having a polyalkylsiloxane group or a fluorohydrocarbon group used in the monomer (A) is less than 50 % by weight because all polymers obtained with such a proportion are remarkably inferior in solubility and have an inferior swelling property in leakage oil.

Accordingly, it is necessary for the present invention that the monomer (A) should contain a monomer having a solubility parameter value (SP value ) of 9 or less and/or a monomer having a polyalkylsiloxane group or a fluorohydrocarbon group in the proportion of 50 % or more by weight. However, the monomer (A) may contain other monomers such as a monomer having a solubility parameter value (SP value) of more than 9 in the proportion of less than 50 % by weight. As such other monomers, there are cross-linking monomers (b), each of which has at least two polymerizing unsaturated-groups in a molecule, and monomers (c), each of which has at least one condensing functional-group and single polymerizing unsaturated-group in a molecule. Examples of such monomers include methoxypolyethylene-glycol (meth)-acrylate, phenoxypolyethylene-glycol (meth)acrylate, etc.

The polymer (I) is obtained by polymerizing the monomer (A) by a well-known method, i.e., radical polymerization, photopolymerization, electron-beam polymerization, radiation polymerization, plasma polymerization, cross-linking polymerization (which will be described later), or the like.

The polymer (I) capable of dissolving in leakage oil is obtained at first as a non-cross-linked polymer (I-1) by polymerizing the monomer (A) by applying the polymerizing method of radical polymerization, photopolymerization, electron-beam polymerization, radiation polymerization, plasma polymerization, or the like.

In radical polymerization, the monomer (A) may be polymerized by using a polymerization initiator. The polymerization may be carried out by the well-known method of solution polymerization, suspension polymerization, bulk polymerization or the like.

The solution polymerization of the monomer (A) can be carried out in a solvent, e.g., alcohol (ethanol, isopropyl alcohol, etc.), an aromatic or aliphatic compound (benzene, toluene, xylene, cyclohexane, n-hexane, etc.), ketone (methylethyl ketone, etc. ) or ester (ethyl acetate, etc. ) in the presence of a polymerization initiator, e.g., an organic peroxide (benzoyl peroxide, lauroyl peroxide, cumene hydroperoxide, etc.) or an azo compound (2,2'-azobisisobutyronitrile, 2,2'-azobisdimethyl valeronitrile, etc.). The polymerization temperature is normally in the range of 0 - 150°C, and the polymerization apparatus may employ a stirring bath or a kneader. In this way, a viscous liquid substance containing the intended non-cross-linked polymer (I-1) can be obtained.

The suspension polymerization may be carried out by suspending the components of the monomer in water by the use of an emulsifier of a high HLB value or a protective-colloid agent of polyvinyl alcohol, hydroxyethyl cellulose, gelatin, or the like in the presence of an oil-soluble polymerization-initiator similar to those used in the above mentioned solution polymerization. Preferably, the polymerization temperature is in the range of 0 - 150°C. Obtained aqueous suspension of a finely granulated resin having a particle size of about 1 - 1000 micrometers is filtered and dried to obtain the non-cross-linked polymer (I-1) in granules.

In the bulk polymerization, the intended non-cross-linked polymer (I-1) is obtained by pouring the monomer material, in the presence of the above mentioned polymerization initiator, into a mold and by polymerizing it at 0 - 150°C.

The non-cross-linked polymer (I-1) thus obtained is adjusted in viscosity to a required degree by a solvent and is then coated on core materials or cladding materials to form the optical fibers. Then the solvent is dried off, and the core and the cladding are covered with the non-cross-linked polymer (I-1).

Alternatively, the optical fibers covered with the non-cross-linked polymer (I-1) may be obtained by directly polymerizing the monomer (A) on the core materials or the cladding materials in such a manner that a polymerization initiator or a polymerization accelerator is added to the monomer (A) to be coated over the core materials or the cladding materials to form the optical fibers, and after coating, the coating is heated and irradiated by light, an electron beam, radiation, plasma or the like.

The polymer (I) capable of absorbing leakage oil is obtained by cross-linking and polymerizing the monomer (A) and thereby synthesizing to produce a cross-linked polymer (I-2). To obtain the cross-linked polymer (I-2) by cross-linking and polymerizing the monomer (A), there are, e.g., a method to copolymerize, by the above-mentioned polymerizing methods, a monomer (A) containing the cross-linking monomer (b) having at least two polymerizing unsaturated-groups in a molecule to obtain the cross-linked polymer (II) and a method to cross-link a prepolymer which has been obtained by copolymerizing a monomer (A) containing the monomer (c) having at least one condensing functional-group (X) and single polymerizing unsaturated-group in a molecule to produce a cross-linked polymer (III) by a cross-linking condensing-agent (B) having, in a molecule, at least two condensing functional-groups (Y) capable of condensing with the condensing functional-group (X).

Examples of the cross-linking monomer (b) may include ethylene-glycol di(meth)acrylate, diethylene-glycol di(meth)acrylate, polyethylene-glycol di(meth)acrylate, polyethylene-glycol-polypropylene glycol di-(meth)acrylate, propylene glycol di(meth)acrylate, polypropylene glycol di(meth)acrylate, 1,3-butylene glycol di(meth)acrylate, neopentyl glycol di(meth)aerylate, 1,6-hexanediol di(meth)acrylate, N,N'-methylene-bisacrylamide, N,N'-propylene-bisacrylamide, glycerol tri(meth)acrylate, trimethylolpropane tri(meth)acrylate, tetramethylolmethane tetra(meth)acrylate, multi-functional (meth)acrylate obtained by esterification from an alkylene-oxide adduct of polyhydric alcohol (e.g., glycerol, trimethylolpropane, or tetramethylolmethane) and a (meth)acrylic acid, and divinylbenzene. One or two or more of those cross-linking monomers may be used.

Preferably, the proportion of the cross-linking monomer (b) in the monomer (A) producing the cross-linked polymer (II) is in the range of 0.001 - 10 % by weight. More preferably, the ratio of the monomer (a) to monomer (b) is that the proportion of the monomer (a) is in the range of 90 - 99.999 % by weight, and the proportion of the cross-linking monomer (b) is in the range of 0.001 - 10 % by weight with respect to the total amount of the monomer (a) and the cross-linking monomer (b).

It is undesirable for the proportion of the cross-linking monomer (b) in the monomer (A) to be more than 10 % by weight because if it is more than 10 %, then the cross-link density of the obtained cross-linked polymers will be so high that only the covering materials with a low absorptivity for leakage oil will be obtained. In contrast, if the proportion of the cross-linking monomer (b) is less than 0.001 % by weight, then cross-linked polymers will become a covering material of the type that dissolves in leakage oil.

To produce the cross-linked polymer (II) and then cover optical fibers with the polymer is accomplished in such a way that after a polymerization initiator or a polymerization accelerator is added to the monomer (A) containing the cross-linking monomer (b), core materials or cladding materials to form the optical fibers are coated with the monomer (A), and then the monomer (A) is directly polymerized on the core materials or the cladding materials by heating and irradiating with light, an electron beam, radiation, plasma or the like.

The monomer (c) having at least one condensing functional-group (X) and one polymerizing unsaturated-group in a molecule is a chemical compound which has the condensing functional-group (X) capable of condensing and bonded with the condensing functional-group (Y) of the cross-linking condensing agent (B), which will be described later. Examples of the monomer (c) may include vinyl monomers having a carboxylic group such as (meth)acrylic acid, fumaric acid, and itaconic acid; vinyl monomers having a hydroxyl group such as hydroxyethyl (meth)acrylate, polyethylene-glycol mono(meth)acrylate, propylene-glycol mono(meth)acrylate, polypropylene-glycol mono(meth)acrylate, glycerol mono(meth)acrylate, trimethylolpropane mono(meth)acrylate, and hydroxystyrene; vinyl monomers having a mercaptal group such as vinyl mercaptan and mercaptoethyl (meth)acrylate; vinyl monomers having a nitrile group such as (meth)acrylonitrile; vinyl monomers having an amino group such as aminoethyl (meth)acrylate and vinyl pyridine; vinyl monomers having an amido group such as (meth)acrylamide; vinyl monomers having an isocyanate group such as vinyl isocyanate; vinyl monomers having an epoxy group such as glycidyl (meth)-acrylate; and acid anhydrides having a polymerizing unsaturated-group such as maleic anhydride. One or two or more of these monomers may be used.

The proportion of the monomer (c) in the monomer (A) used in producing the prepolymer is preferably in the range of 0.005 - 10 % by weight. More preferably, the ratio of the monomer (a) to the monomer (c) is that the proportion of the monomer (a) is in the range of 90 - 99.995 % by weight, and the proportion of the monomer (c) is in the range of 0.005 - 10 % by weight with respect to the total amount of the monomer (a) and the monomer (c).

It is not desirable for the proportion of the monomer (c) in the monomer (A) to exceed the 10 % by weight because if it does, then the cross-link density of the cross-linked polymer obtained later by the addition of the cross-linking condensing-agent (B) will be too high, and the number of the residual condensing functional-groups will be too great. As a result, only the covering materials with a significantly reduced absorptivity for leakage oil can be obtained. On the other hand, if the proportion of the monomer (c) is less than 0.005 % by weight, the cross-linked polymer will be a covering material of the type that dissolves in leakage oil.

To produce the prepolymer, the monomer (A) containing the monomer (c) may be copolymerized using a polymerization initiator. The copolymerization can be carried out by a well-known method of solution polymerization, suspension polymerization, bulk polymerization or the like.

The solution polymerization can be carried out in a solvent, e.g., alcohol (ethanol, isopropyl alcohol, etc.), an aromatic or aliphatic compound (benzene, toluene, xylene, cyclohexane, n-hexane, etc,), ketone (methyl-ethyl ketone, etc.), or ester (ethyl acetate, etc.) in the presence of a polymerization initiator, e.g., an organic peroxide (benzoyl peroxide, lauroyl peroxide, cumene hydroperoxide, etc.) or an azo compound (2,2'-azobisisobutyronitrile or 2,2'-azobisdimethyl valeronitrile, etc.). The polymerization temperature is normally in the range of 0 - 150 °C, and the polymerisation apparatus may employ a stirring bath or a kneader. In this way, a viscous liquid substance containing the intended prepolymer can be obtained, and then the prepolymer can be obtained by drying the viscous liquid substance.

The suspension polymerization may be carried out by suspending the monomer components in water using an emulsifier of a high HLB value or a protective-colloid agent of polyvinyl alcohol, hydroxyethyl cellulose, gelatin or the like in the presence of an oil-soluble polymerization-initiator similar to those used in the above solution polymerization. The polymerization temperature is preferably in the range of 0 - 150°C. Obtained aqueous suspension of a finely granulated polymer having a particle size of about 1 - 1000 micrometers is filtered and dried to obtain the prepolymer in granules.

The bulk polymerization may be carried out by pouring the monomer material with an above mentioned polymerization initiator into a mold and polymerizing it at 0 - 150°C to obtain the intended prepolymer.

The cross-linking condensing-agent (B) used in the present invention having at least two condensing functional-groups (Y) in a molecule is a compound which functions as a cross-linking agent capable of condensing with the condensing functional-group (X) in the monomer (c) contained in the prepolymer. The cross-linking condensing-agent (B) can be suitably selected in accordance with the condensing functional-group (X) contained in the prepolymer. Examples of the cross-linking condensing-agent (B) may include phenol resins such as dimethylolphenol, polymethylolphenol, etc., which are capable of condensing when the condensing functional-group (X) is the carboxyl group, mercapto group, nitrile group, or epoxy group; amino resins obtained by the addition-condensation of amino compounds such as melamine, benzoguanamine, and urea with formaldehyde and/or alcohol, which are capable of condensing when the condensing functional-group (X) is the carboxyl group or hydroxyl group; polyamino compounds such as hexamethylene diamine, diethylene triamine, and tetraethylene pentamine, which are capable of condensing when the condensing functional-group (X) is the carboxyl group, isocyanate group, or epoxy group; isocyanate compounds such as hexamethylene diisocyanate, isophorone diisocyanate, p-phenylene diisocyanate, 2,4-toluene diisocyanate, 2,6-toluene diisocyanate, and 1,5-naphthalene diisocyanate, and blocked isocyanate obtained by the condensation of the above mentioned isocyanate compounds with methanol or phenol, which are capable of condensing when the condensing functional-group (X) is the carboxyl group, hydroxyl group, mercapto group, isocyanate group, amido group, amino group, or epoxy group; polycarboxylic acids such as malonic acid, succinic acid, adipic acid, phthalic acid, or terephthalic acid, which are capable of condensing when the condensing functional-group (X) is the epoxy group or isocyanate group; acid anhydrides such as phthalic anhydride, pyromellitic anhydride, and benzophenone-tetracarboxylic-acid anhydride, which are capable of condensing when the condensing functionalgroup (X) is

6

the hydroxyl group, isocyanate group, or epoxy group; aldehyde compounds such as glyoxal and terephthal aldehyde, which are capable of condensing when the condensing functional-group (X) is the hydroxyl group, mercapto group, amino group, or amido group; polyhydric alcohols such as ethylene glycol, diethylene glycol, propylene glycol, and hexane diol, which are capable of condensing when the condensing functional-group (X) is the hydroxyl group, isocyanate group, or epoxy group; and epoxy compounds such as toluene diglycidyl ether, hexamethylene dlglycidyl ether, bisphenol A diglycidyl ether, and polypropylene-glycol-diglycidyl ether, which are capable of condensing when the condensing functional-group (X) is the carboxyl group, hydroxyl group, mercapto group, or isocyanate group. The combinations of the cross-linking condensing-agent (B) with the condensing functional-group (X) contained in the prepolymer are appropriately selected in accordance with the kinds of the condensing fuctional-group (X) used, and one or two or more of the above mentioned compounds may be used.

Among the above mentioned compounds, the especially preferable combination of the condensing functional-group (X) and the condensing functional-group (Y) is a combination of at least one functional group selected from the groups of the carboxyl group, hydroxyl group, mercapto group, amino group and amido group and at least one functional group selected from the groups of the isocyanate group, epoxy group and carboxylic-anhydride group.

The ratio of the prepolymer to the cross-linking condensing-agent (B) used for carrying out cross-linking is decided in accordance with the molar ratio of the condensing functional-group (X) contained in the monomer (c) constituting the prepolymer to the condensing functional-group (Y) contained in the cross-linking condensing-agent (B). It is preferable that the molar ratio of the condensing functional-group (Y) to 1 mole of the condensing functional-group (X) is in the range of 0.1 - 10.

It is undesirable that the number of moles of the condensing functional-group (Y) to 1 mole of the condensing functional-group (X) is less than 0.1 or more than 10. If it is less than 0.1 or more than 10, then the cross-linking cannot be sufficiently carried out, so only cross-linked polymers with small strength are obtained, or no cross-linked polymer is produced.

To produce the cross-linked polymer (III) and cover with it, core materials or cladding materials to form optical fibers, the prepolymer and the cross-linking condensing-agent (B) are mixed together, the mixture is then coated, and cross-linking reaction is carried out under a heated condition. It is possible to speed up the reaction process by selectively using catalysts for accelerating the reaction in accordance with arising needs. Further, the prepolymer can be diluted by an inactive solvent incapable of condensing with the condensing functional-group (X) and the condensing functional-group (Y) to adjust the viscosity of the prepolymer, and then the prepolymer can be coated on the core materials or the cladding materials before the crosso-linking reaction proceeds. After the cross-linking reaction is effectuated under a heated condition, the solvent can be dried off.

The covering material for leakage-oil-detecting optical-fiber sensors of the present invention is a covering material for the optical-fiber sensors used with devices for detecting leakage oil appearing along optical fibers by sensing changes in the propagation loss of light or changes in the intensity of backscattering light occurring in the optical fibers. It is necessary for the covering material to have a refractive index less than or equal to those of the core materials or the cladding materials constituting the optical fibers to be covered with the covering material. Such covering materials can be appropriately selected from the polymers (I) capable of dissolving in leakage oil or absorbing it in accordance with the refractive indexes of the core materials or the cladding materials to form the optical fibers.

The covering material of the present invention can be used in general as a covering material constituting optical fibers used with leakage-oil-detecting devices for measuring changes in the propagation loss of light or changes in the intensity of backscattering light occurring in the optical fibers by means of an optical-power meter or an OTDR.

The leakage-oil-detecting device employing an optical-power meter can be a device which is arranged to have an optical-fiber sensor constructed by covering the core of an optical fiber, e.g., generally used in the prior art with the polymer (I) having a refractive index less than or equal to that of the core and which introduces light from one end of the optical-fiber sensor and measures the intensity of the light reaching the other end by an optical-power meter. In this case, if leakage oil contacts a portion of the optical-fiber sensor, the covering material of the present invention will dissolve in the leakage oil or absorb it , causing a change in the refractive index at the surface of the core and some of the light to escape. As a result, the degree of light-propagation loss being measured by the optical-power meter will change, making the detection of the oil leak possible.

The leakage-oil-detecting device employing an OTDR (Optical-Time-Domain Reflectometer) can be a device which is arranged to have an optical-fiber sensor constructed by covering the cladding layer of a quartz optical-fiber, e.g., whose cladding layer is thin enough to allow evanescent waves of light to escape through, with the polymer (I) having a refractive index less than or equal to that of the cladding and which introduces light from one end of the optical-fiber sensor, and backscattering of the light is measured by means of the OTDR.

As an optical fiber used with this device, it is particularly preferable that an eccentric-core optical-fiber is applied. Such an eccentric-core optical-fiber can be obtained by forming a base material having an eccentric core from an ordinary optical-fiber base-material and then by wire-drawing the base material. In contrast with the application of a concentric-core optical-fiber, which has a concentric structure of a core and cladding, to the sensor, the application of an eccentric-core optical-fibers provides a high sensitivity. The sensitivities of the sensors can be further enhanced by adjusting the diameters of the cores and the thicknesses of the cladding.

As the eccentric-core optical-fibers used for the devices are covered with the polymer (I) having a refractive index less than or equal to those of the cladding of the optical fibers and being capable of dissolving in the leakage oil to be detected or absorbing it, there is no possibility for the evanescent wave having penetrated out of the eccentric optical-fibers to further leak out through the covering material. Further, since the covering material also functions as a reinforcing material for the eccentric-core optical-fibers, the probability of the optical fibers getting damaged does not increase when the optical fibers are even made of quartz glass.

In the leakage-oil-detecting devices employing the eccentric-core optical-fiber sensors covered with the covering material of the present invention, when leakage oil comes into contact with the covering material, the covering material functions to absorb the leakage oil or to dissolve in it, causing a change in the refractive index of the surrounding of the cladding of the eccentric-core optical-fibers. As a result, the leakage and the position of the leakage can be detected as a change in the intensity of backscattering light by means of the OTDR.

While the covering material for the leakage-oil-detecting optical-fiber sensors according to the present invention is of the polymer (I) having a refractive index less than or equal to those of the core materials or the cladding materials constituting the optical fibers and being capable of dissolving in the leakage oil to be detected or of absorbing it, if the polymer doesn't have sufficient mechanical strength as required, then the covering material may be further covered with a second covering material. As such a second covering material, any material can be applied as long as it can dissolve in leakage oil or absorb it, or it allows leakage oil to permeate easily through the material itself. Resins for the second covering material capable of dissolving in leakage oil or absorbing it can be appropriately selected from the polymers (I) mentioned for the covering material of the present invention in accordance with required mechanical strength irrespective of their refractive indices. Further, as the resin to allow leakage oil to permeate easily through the resin itself, resins having a network structure or numerous pores can be applied.

### Brief Description of Drawings

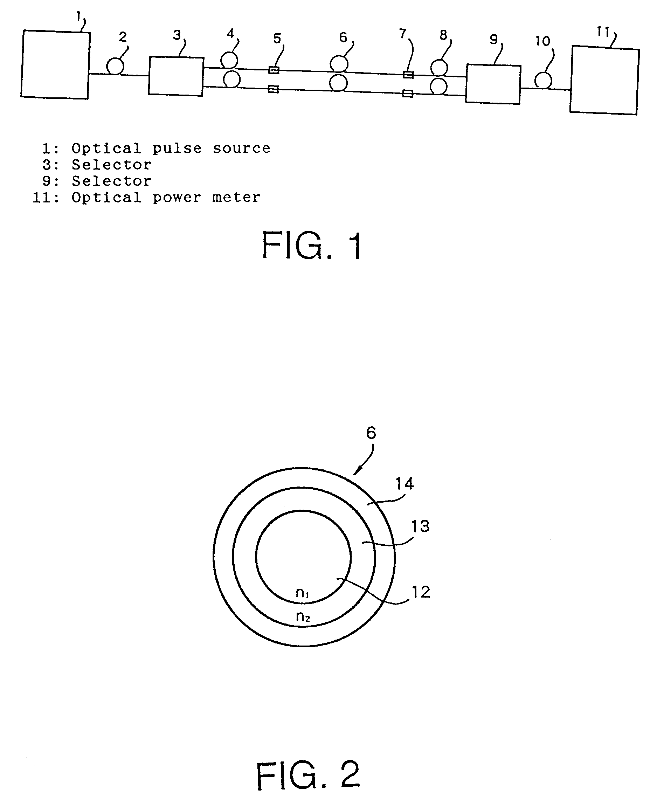

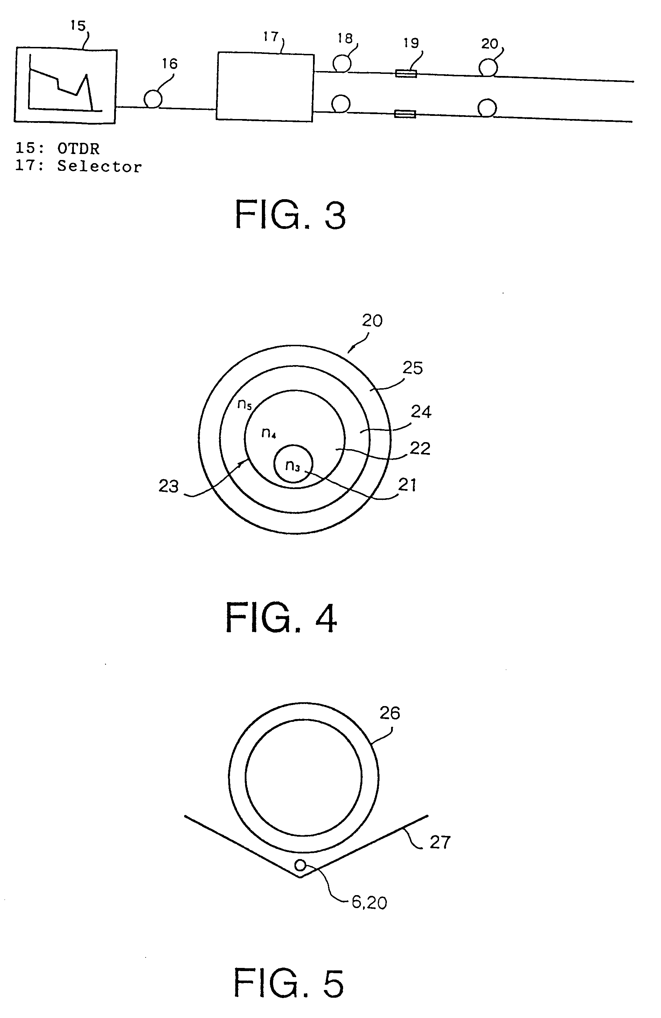

Figure 1 is a schematic drawing of a leakage-oil-detecting device showing one embodiment according to the present invention; Figure 2 is an enlarged sectional view of the sensor fiber used in the embodiment shown in Figure 1; Figure 3 is a schematic drawing of a leakage-oil-detecting device showing another embodiment according to the present invention; Figure 4 is an enlarged sectional view of the sensor fiber used in the embodiment shown in Figure 3; and Figure 5 is a sectional view illustrating a condition where the sensor fiber is applied to a crude oil pipeline.

### Best Mode for Carrying Out the Invention

Now the present invention will be described with some preferred embodiments.

Figure 1 is a block diagram of detecting leakage oil by using an optical-power meter.

Optical pulses output from an optical-pulse source 1 are led through an ordinary single-mode optical-fiber 2 and a selector 3 to an ordinary single-mode optical-fiber 4 and a sensor fiber 6 connected by a connector 3 with the optical fiber 4. The optical pulses are further led through a connector 7 at the other end of the sensor fiber 6 to an ordinary single-mode optical-fiber 8, a selector 9 and an ordinary single-mode optical-fiber 10 and then to an optical-power meter 11. The selectors, 3 and 9, are provided in order to enable measuring and monitoring with a plurality of sensor fibers 6 against a single optical-pulse source and a single optical-power meter.

Figure 2 shows the sectional structure of the above mentioned sensor fiber 6. As illustrated, the sensor fiber 6 is constructed of a core 12 and a covering material 13 covering the core 12 (and a second covering material 14 if a need arises). The covering material 13 covering the core 12 has a refractive index $n_2$ less

than the refractive index $n_1$ of the core 12. The covering material 13 is made of the polymer (I) of the present invention capable of dissolving in oil or absorbing it . Furthermore, in the ease of the second covering necessary, the second covering material 14 is made of a material capable of absorbing oil or dissolving in it or capable of allowing oil to permeate easily through the material itself. As the relation of $n_1 > n_2$ is established, i.e., the refractive index $n_2$ of the covering material 13 is less than the refractive index $n_1$ of the core 12, there is no possibility for the light propagated in the core 12 to leak out through the covering material 13.

The sensor fiber 6 of the above mentioned construction is installed, for example, as shown in Figure 5, with a trough 27 along the lower surface of a pipeline 26 extending from a crude-oil tank.

When an oil leak occurs along the pipeline 26, the leakage oil received in the trough 27 comes into contact with the sensor fiber 6, and the covering material 13 dissolves in the leakage oil or absorbs it. In the case of the second covering being employed, the second covering material 14 first absorbs the leakage oil or allows the leakage oil to permeate through the second covering material itself, or the second covering material 14 first dissolves in the leakage oil, and then the first covering material 13 dissolves in the leakage oil or absorbs it. As a result, the value of the refractive index of the covering material 13 originally having the refractive-index value of $n_2$ changes to a value close to the refractive index of the leakage oil, causing light to leak out. Thus, by measuring the light intensity of the optical pulses propagated through the core 12 with the optical-power meter 11, the monitoring and measuring of oil leakage is accomplished.

Although the present invention has been described so far with reference to the detection of leakage oil along a pipeline connected to a crude-oil tank, various oils (various forms of petroleum such as crude oil, heavy oil and light oil, and various solvents such as benzene, toluene and xylene) having refractive indices larger than the refractive index of the covering material 13 can be similarly detected.

Figure 3 is a block diagram of the case that the detection of leakage oil is made possible by sensing backscattering of optical pulses using an OTDR (Optical-Time-Domain Reflectometer).

Optical pulses output from an optical-pulse source inside the OTDR device 15 are led through an ordinary single-mode optical-fiber 16 and a selector 17 to an ordinary single-mode optical-fiber 18 and a sensor fiber 20 fused and connected 19 with this optical fiber 18.

The backscattering light occurring in the sensor fiber 20 is received and processed by a light-receiving circuit of the OTDR device 15, and a leakage distribution is obtained in the longitudinal direction of the sensor fiber 20 from the information of a loss-occurring position and a light intensity of the backscattering light. The selector 17 is provided in order to enable measuring and monitoring with a plurality of sensor fibers against a single OTDR device.

Figure 4 shows the sectional structure of the above mentioned sensor fiber 20. As illustrated, the sensor fiber 20 is constructed of an eccentric-core optical-fiber 23 of a core 21 shifted from the center of cladding 22 and a covering material 24 covering the optical fiber 23 (and a second covering material 25 if a need arises).

Unlike the ordinary single-mode optical-fibers 16 and 18, the core 21 of the eccentric-core optical-fiber 23 is eccentric with the cladding 22, and the thickness of the thinnest portion of the cladding 22 surrounding the core 21 is made thin enough to attain the escaping effect of evanescent waves of the light propagated in the core 21. Such an eccentric-core optical-fiber 23 can be obtained by first forming a base material with a core placed eccentric in an ordinary optical-fiber base-material and then wire-drawing the base material. However, since it is very difficult to align such an eccentric-core optical-fiber to the selector 17 in directly connecting with a connector, the core 21 of the eccentric-core optical-fiber 23 is first fused and connected with the core of an ordinary single-mode optical-fiber 18 in alignment to each other, and then the single-mode optical-fiber 18 is directly connected with a connector to the selector 17.

The covering material 24 covering the eccentric-core optical-fiber 23 has a refractive index $n_5$ less than the refractive index $n_4$ of the cladding, and it is made of the polymer (I) of the present invention capable of dissolving in oil or absorbing it. In the case of additionally employing the second covering, the second covering material 25 is made of a material capable of absorbing oil or dissolving in it or allowing oil to permeate easily through the material itself. As the relation of $n_3 > n_4 > n_5$, where $n_3$ stands for the refractive index of the core 21, is established, i.e., the refractive index $n_5$ of the covering material 24 is less than that of the cladding 22, there is no possibility for evanescent waves escaping out of the core 21 to leak out through the covering material 24.

The sensor fiber 20 of the above mentioned construction is installed, for example, as shown in Figure 5, with a trough 27 along the lower surface of a pipeline 26 extending from a crude-oil tank.

When an oil leak occurs along the pipeline 26, the leakage oil received in the trough 27 comes into contact with the sensor fiber 20, and the covering material 24 dissolves in the leakage oil or absorbs it. In the case of the second covering being employed, the second covering material 25 first absorbs the leakage oil or allows the oil to permeate through the material 25, or the material 25 dissolves in the leakage oil, and then the first covering material 24 dissolves in the leakage oil or absorbs it. As a result, the value of the refractive index of the covering material 24 originally having the refractive index $n_5$ is changed to a value close to the refractive index of the oil, resulting in an increase in the loss of light quantity caused by the adhesion of oil to the eccentric-core optical-fiber 23, i.e., an increase in the light quantity escaping from the core 21 through the thinnest portion of the cladding 22. Backscattering light occurring in the eccentric-core optical-fiber 23 when the optical pulses propagate through the core 21 is received and processed by the OTDR device 15, thereby monitoring and measuring the distribution of oil leaks and leak positions.

Although the present invention has been described so far referring to the detection of leakage oil along a pipeline connected to a crude-oil tank, for various oils (various forms of petroleum such as crude oil, heavy oil and light oil and various solvents such as benzene, toluene and xylene) having refractive indices larger than that of the cladding 22, the detection can be similarly done.

Now the present invention will be described in detail with some embodiments, but they are not intended to limit the scope of the present invention. In the following examples, it is to be noted that the term "parts" stands for parts by weight unless otherwise indicated.

Embodiment 1

A solution of 3 parts of polyvinyl alcohol and 300 parts of water was introduced into a 500 ml flask equipped with a thermometer, stirrer, gas-inlet pipe and reflux condenser, and the air in the flask was replaced with nitrogen while the solution was stirred, and then the solution was heated to 40°C under a stream of nitrogen. Then, a solution of 70.0 parts of isobornyl acrylate and 30.0 parts of 1H, 1H, 5H-octafluoropentyl acrylate as the monomer (A) and 0.5 part of benzoyl peroxide as a polymerization initiator was added in one potion to the solution in the flask, and the resulting solution was vigorously stirred at 400 rpm. Then, the temperature inside the flask was increased to 80°C and kept at this temperature for 2 hours to carry out polymerization reaction. Then, the temperature inside the flask was further increased to 90°C and kept at this temperature for 2 hours to complete the polymerization. After completing the polymerization, a granular product was filtered out, washed with water, and dried at 60°C, yielding a polymer (1) having a particle size of 100 - 1000 micrometers and a refractive index of 1.450. 30 parts of the polymer (1) was dissolved in 70 parts of ethyl acetate, and this solution was applied onto a quartz fiber (refractive index 1.490) having a diameter of 125 micrometers and a length of 1 m. Then, the ethyl acetate was dried off to obtain an optical-fiber sensor (1). The thickness of the polymer (1) coated over the quartz fiber was 50 micrometers. The opticalfiber sensor (1) thus obtained was connected to the aforementioned leakage-oil-detecting device employing an optical-power meter. When toluene was applied to contact a portion of the optical-fiber sensor (1), a change in light intensity was observed in 15 minutes.

Embodiment 2

A solution of 70.0 parts of polydimethyl (methacryloxypropyl)siloxane (MW 1000) and 30.0 parts of dodecyl acrylate as the monomer (A), 0.110 part of 1,6-hexanediol diacrylate equivalent to the cross-linking monomer (b), and 0.5 part of azobisdimethyl valeronitrile as a polymerization initiator was applied onto a quartz fiber (refractive index 1.490) having a diameter of 125 micrometers and a length of 1 m, and the solution was polymerized in nitrogen gas at 60°C to obtain a fiber covered with a polymer (2) (refractive index 1.430). Then, a solution of 30 parts of polystyrene and 70 parts of toluene was further applied onto the fiber obtained, and the toluene was dried off to obtain an optical-fiber sensor (2) covered with the first covering material and the second covering material. The thicknesses of the first covering material and the second covering material were 30 micrometers and 30 micrometers, respectively. This optical-fiber sensor (2) was connected to the aforementioned leakage-oil-detecting device employing an optical-power meter. When xylene was applied to contact a portion of the optical-fiber sensor (2), a change in light intensity was observed in 20 minutes.

Embodiment 3

20 parts of toluene was introduced into a flask equipped with a thermometer, stirrer, two dropping funnels, gas inlet pipe and reflux condenser, and the air in the flask was replaced with nitrogen while the toluene was being stirred, and the toluene in the flask was heated to 80°C under a stream of nitrogen. Then, while maintaining this temperature under the stream of nitrogen, a monomer-mixed solution of 70.0 parts of polydimethyl (methacryloxypropyl)siloxane (MW 1000) and 30.0 parts of decyl acrylate as the monomer (A) 1.566 parts of hydroxyethyl acrylate equivalent to the monomer (C), and 50 parts of toluene was dripped into the flask from one of the dropping funnels over the period of 2 hours. Simultaneously, a polymerization initiator solution of 0.5 part of azobisdimethyl valeronitrile and 80 parts of toluene was also dripped from the other dropping funnel over the period of 3 hours. After ending the dripping, the solution was kept for 1 more hour at the same temperature to complete the polymerization. The solvent was then distilled off under a reduced pressure, yielding a prepolymer (1).

Next, a mixed solution of 100 parts of the prepolymer (1), 2.233 parts of hexamethylene diisocyanate as the cross-linking condensing-agent (B), and 0.1 part of di-n-butyltin dilaurate as a catalyst was applied onto an eccentric-core optical-fiber, which will be described below, and condensation reaction was carried out at 150°C to form an optical-fiber sensor (3) covered with a polymer (3) (refractive index 1.440). The thickness of the polymer (3) covering the optical-fiber sensor (3) was 50 micrometers. The optical-fiber sensor (3) thus obtained was connected to the aforementioned leakage-oil-detecting device employing an OTDR. When crude oil was applied to contact the central portion of the optical-fiber sensor (3), a change in light intensity and the position of the crude oil application were observed in 10 minutes.

The fiber with the following structural features was used as the eccentric-core optical-fiber.

| | |
|---|---|
| Core diameter: | 7.3 micrometers |
| Cladding diameter: | 123 micrometers |
| Thickness of buffer layer: | 3.0 micrometers |
| Refractive index of cladding: | 1.458 |
| Fractional core/cladding index difference $\Delta$: | 0.31 |
| Length: | 500 m |

Embodiment 4

The same procedure as in Embodiment 3 was followed to prepare a prepolymer (2) except that 60.0 parts of dodecyl acrylate and 40.0 parts of 1H,1H,5H-octafluoropentyl acrylate were used as the monomer (A) and that 1.792 parts of acrylic acid equivalent to the monomer (c) was used, instead.

Similarly to Embodiment 3, a mixed solution of 100 parts of the prepolymer (2), 5.624 parts of 1,6-hexamethylenediglycidyl ether as the cross-linking condensing-agent (B), and 0.1 part of 2,4,6-tris-(dimethylaminomethyl)phenol was applied onto an eccentric-core optical-fiber to carry out condensation reaction over the fiber, and an optical-fiber sensor (4) covered with a polymer (4) (refractive index 1.450) was obtained. The thickness of the polymer (4) covering the optical-fiber sensor (4) was 50 micrometers. The optical-fiber sensor (4) thus obtained was connected to the aforementioned leakage-oil-detecting device employing an OTDR. When heavy oil A was applied to contact the central portion of the optical-fiber sensor (4), a change in light intensity and the position of the heavy-oil application were observed in 10 minutes.

As described above, the covering material for the leakage-oil-detecting optical-fiber sensors according to the present invention is formed of a polymer which is obtained by polymerizing a specific monomer and has a good solubility or a swelling property in various kinds of oils. By applying the covering material of the present invention to optical-fiber sensors used with devices for detecting leakage oil occurring along the optical fibers of the devices by sensing changes in the propagation loss of light or changes in the intensity of backscattering light occurring in the optical fibers, the following outstanding effects can be exhibited.

Since the covering material for the leakage-oil-detecting optical-fiber sensors according to the present invention is formed of a polymer having a refractive index less than or equal to those of the core materials or the cladding materials constituting the optical fibers used for the sensors and being capable of dissolving in leakage oil or absorbing leakage oil, it is not possible for the light propagating in the cores of the optical fibers to leak out through the covering material. Furthermore, since the covering material also functions as a reinforcing material for the optical fibers, the probability of damage to occur to the optical fibers does not increase even if thin optical fibers made of quartz glass are used. Moreover, when an oil leak occurs, the covering material of the present invention dissolves quickly in the leakage oil or quickly absorbs it to change the refractive index at the surface of the optical fiber subjected to the leakage oil and thereby allows the light to leak out of the optical fiber. As a result, there will be changes in the propagation loss of light and in the intensity of backscattering light, and the oil leak and the leakage position can be detected with a high sensitivity by means of an optical-power meter or an OTDR. Thus, the monitoring of leaks and the measurement of leak positions over a long distance can be carried out securely with a high sensitivity, greatly contributing to industrial development.

**Claims**

1. A covering material for a leakage-oil-detecting optical-fiber sensor used with a device for detecting a leakage oil along an optical fiber by sensing a change in an amount of light-propagation loss or a change in an intensity of backscattering light occurring in said optical fiber, characterized in that said covering material has a refractive index less than or equal to that of a core material or a cladding material constituting said optical fiber to be covered with said covering material, and that said covering material includes a polymer (I) capable of dissolving in said leakage oil or absorbing said leakage oil, said polymer (I) obtained by polymerizing a monomer (A) having the principal component constituted of a monomer having a solubility parameter value (SP value) of 9 or less and/or a monomer having a polyalkyl-siloxane group or a fluorohydrocarbon group, each said monomer having one polymerizing unsaturated-group in a molecule.

2. The covering material as set forth in Claim 1, wherein said monomer (A) comprises a monomer (a), as a principal component, of mono(meth)acrylic-acid ester of alcohol having at least one group selected from groups of aliphatic hydrocarbon groups with 3 - 30 carbon atoms, alicyclic hydrocarbon groups with 6 - 30 carbon atoms, polyalkylsiloxane groups with a degree of condensation of 3 - 100, and fluorohydrocarbon groups with 3 - 30 carbon atoms.

3. The covering material as set forth in Claim 2, wherein said monomer (A) contains said monomer (a) of mono(meth)acrylic acid ester in a proportion of 50 % or more by weight.

4. The covering material as set forth in Claim 1, wherein said covering material is formed of a non-cross-linked polymer (I-1) obtained by polymerizing said monomer (A), said non-cross-linked polymer (I-1) being capable of dissolving in said leakage oil.

5. The covering material as set forth in Claim 1, wherein said covering material is formed of a cross-linked polymer (I-2) obtained by cross-linking and polymerizing said monomer (A), said cross-linked polymer (I-2) being capable of absorbing said leakage oil and thereby swelling.

6. The covering material as set forth in Claim 5, wherein said cross-linked polymer (I-2) is a cross-linked polymer (II) obtained by copolymerizing a monomer substance composed of 90 - 99.999 % by weight of said monomer (a) and 0.001 - 10 % by weight of a cross-linking monomer (b) having at least two polymerizing unsaturated-groups in a molecule (with a proviso that a total amount of said monomer (a) and said monomer (b) is 100 % by weight).

7. The covering material as set forth in Claim 5, wherein said cross-linked polymer (I-2) is a cross-linked polymer (III) obtained by cross-linking a prepolymer by a cross-linking condensing-agent (B), said prepolymer having been obtained by copolymerizing a monomer substance composed of 90 - 99.995 % by weight of said monomer (a) and 0.005 - 10 % by weight of a monomer (c) having at least one condensing functional-group (X) and one polymerizing unsaturated-group in a molecule (with a proviso that a total amount of said monomer (a) and said monomer (c) is 100 % by weight) and said cross-linking condensing-agent (B) having in a molecule at least two condensing functional-groups (Y) capable of condensing with said condensing functional-group (X).

8. A covering material for a leakage-oil-detecting optical-fiber sensor, characterized in that said covering material has a refractive index less than or equal to that of a core material or a cladding material constituting an optical fiber, that said covering material is formed by polymerizing a monomer (A) having, as a principal component, a monomer of a solubility parameter value (SP value) of 9 or less and/or a monomer having a polyalkyl-siloxane group or a fluorohydrocarbon group, each said monomer having one polymerizing unsaturated-group in a molecule, and that said covering material is coated on said core material or said cladding material to form said optical-fiber, said optical fiber being applied as said optical-fiber sensor used with a leakage-oil-detecting device measuring a change in an amount of light propagation loss occurring in said optical fiber by means of an optical-power meter.

9. A covering material for a leakage-oil-detecting optical-fiber sensor, characterized in that said covering material has a refractive index less than or equal to that of a core material or a cladding material constituting an optical fiber, that said covering material is formed by polymerizing a monomer (A) having, as a principal component, a monomer having a solubility parameter value (SP value) of 9 or less and/or a monomer having a polyalkylsiloxane group or a fluorohydrocarbon group, each said monomer having one polymerizing unsaturated-group in a molecule, and that said covering material is coated on said cladding of an eccentric-core optical-fiber to form said optical fiber, said optical fiber being applied as said optical-fiber sensor used with a leakage-oil-detecting device for measuring a leakage-oil distribution along said optical fiber by sensing a change in an intensity of backscattering light occurring in said optical fiber by means of an OTDR.

1: Optical pulse source
3: Selector
9: Selector
11: Optical power meter

# FIG. 1

# FIG. 2

15: OTDR
17: Selector

# FIG. 3

# FIG. 4

# FIG. 5

# INTERNATIONAL SEARCH REPORT

International Application No PCT/JP91/01383

## I. CLASSIFICATION OF SUBJECT MATTER (if several classification symbols apply, indicate all) [6]

According to International Patent Classification (IPC) or to both National Classification and IPC

Int. Cl[5]    C03C25/02, C08F20/00, 299/00, C09D4/00, 183/00, G02B6/44

## II. FIELDS SEARCHED

| Minimum Documentation Searched [7] | |
|---|---|
| Classification System | Classification Symbols |
| IPC | C03C25/02, C08F20/00, 299/00, C09D4/00, 183/00, G02B6/44 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | JP, A, 60-71549 (Nitto Denko K.K.), April 23, 1985 (23. 04. 85) | 1-9 |
| A | JP, A, 60-110752 (Dow Corning Corp.), June 17, 1985 (17. 06. 85) | 1-9 |
| A | JP, A, 60-255649 (Toray Silicone Co., Ltd.), December 17, 1985 (17. 12. 85), & US, A, 4609590 | 1-9 |
| A | JP, A, 61-30557 (Nippon Kayaku Co., Ltd.), February 12, 1986 (12. 02. 86), & US, A, 4608400 | 1-9 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 17, 1991 (17. 12. 91) | January 14, 1992 (14. 01. 92) |
| International Searching Authority | Signature of Authorized Officer |
| Japanese Patent Office | |

Form PCT/ISA/210 (second sheet) (January 1985)